# EUROPÄISCHE PATENTANMELDUNG

(11) **EP 3 028 897 A1**
(43) Veröffentlichungstag der Anmeldung: **08.06.2016**
(21) Anmeldenummer: 15192668.0
(22) Anmeldetag: 03.11.2015
(51) Int. Cl.: B60Q 1/14, F21S 8/12

(54) **VERFAHREN ZUR ERZEUGUNG EINER FRONTLICHTVERTEILUNG FÜR EIN KRAFTFAHRZEUG UND KFZ-BELEUCHTUNGSEINRICHTUNG**

(30) Priorität: 01.12.2014 DE 102014224562
(71) Anmelder: Automotive Lighting Reutlingen GmbH, 72762 Reutlingen (DE)
(72) Erfinder: Knittel, Joachim, 72762 Reutlingen (DE); Buchberger, Christian, 72770 Reutlingen (DE)
(74) Vertreter: DREISS Patentanwälte PartG mbB

(57) **Zusammenfassung**

Die Erfindung betrifft ein Verfahren zur Erzeugung einer Frontlichtverteilung (54) mittels einer Kfz-Beleuchtungseinrichtung (10), welche eine Basislichteinrichtung (12) zur Abstrahlung einer Basislichtverteilung (26) mit vorgegebenen ausblendbaren Zonen (30) sowie ein Laserzusatzlicht (14) mit einer Laserlichtquelle (32) und einer Lichtwandlungseinrichtung (36) zur Umformung des Laserlichts (34) in eine veränderbare Zusatzlichtverteilung (52) aufweist. Gemäß dem Verfahren wird eine Basislichtverteilung (12) mit wenigstens einer ausgeblendeten Zone (30) erzeugt, und eine Zusatzlichtverteilung (52) derart erzeugt, dass sie die ausgeblendete Zone (30) zumindest teilweise überdeckt. Die Erfindung betrifft außerdem eine Kfz-Beleuchtungseinrichtung (10).

## Beschreibung

Die Erfindung betrifft ein Verfahren zur Erzeugung einer Frontlichtverteilung für ein Kraftfahrzeug (Kfz) gemäß Anspruch 1, sowie eine Kfz-Beleuchtungseinrichtung zur Erzeugung einer Frontlichtverteilung gemäß Anspruch 11.

Im Bereich des Frontlichtes für Kfz-Beleuchtungseinrichtungen werden verschiedene Arten der ausgestrahlten Lichtverteilungen unterschieden, deren Eigenschaften weitgehend gesetzlich geregelt sind. Für Kfz umfasst die Frontlichtverteilung z.B. eine abgeblendete Lichtverteilung und eine Fernlichtverteilung. Zusätzlich können auch weitere Lichtverteilungen wie Seitenausleuchtungen oder Nebellichter vorgesehen sein.

Die abgeblendete Lichtverteilung weist grundsätzlich eine im bestimmungsgemäßen Betrieb der Beleuchtungseinrichtung zumindest abschnittsweise horizontal verlaufende Hell-Dunkel-Grenze auf. Dabei befindet sich ein ausgeleuchteter Bereich unterhalb der Hell-Dunkel-Grenze, insbesondere im Vorfeld des Kfz. Durch den abgedunkelten Bereich oberhalb der Hell-Dunkel-Grenze soll eine direkte Blendung von entgegenkommenden oder vorausfahrenden Fahrzeugen zumindest weitgehend vermieden werden.

Die Fernlicht-Lichtverteilung erstreckt sich zumindest abschnittsweise oberhalb der Hell-Dunkel-Grenze und kann dadurch eine größere Reichweite erzielen. Die Fernlicht-Lichtverteilung kann ggf. zusätzlich mit der abgeblendeten Lichtverteilung unterhalb der Hell-Dunkel-Grenze überlappen. Außerdem kann die Fernlicht-Lichtverteilung eine vergleichsweise größere Intensität aufweisen. Insofern besteht insbesondere hier das Problem, dass vorausfahrende oder entgegenkommende Fahrzeuge direkt geblendet werden können.

Um eine Blendung anderer Verkehrsteilnehmer durch das Frontlicht zu vermeiden und dennoch eine verbesserte Ausleuchtung der Fahrbahn zu erzielen, sind sog. adaptive Frontlichtsysteme bekannt. Beispielsweise werden bei bekannten adaptiven Fernlichteinrichtungen in der Fernlicht-Lichtverteilung solche Bereiche ausgeblendet oder gedimmt, in welchen andere Verkehrsteilnehmer erkannt werden. Die Positionierung der ausgeblendeten Bereiche kann z.B. kameragesteuert erfolgen, wobei eine Kamera ein Sichtfeld aufnimmt und das Bild entsprechend ausgewertet wird, um andere Verkehrsteilnehmer in dem Sichtfeld zu erkennen. Derartige Beleuchtungseinrichtungen können beispielsweise eine Mehrzahl von individuell ansteuerbaren Lichtquellen aufweisen. Jede Lichtquelle speist ein individuell einblendbares und ausblendbares Segment der abgegebenen Lichtverteilung. Um das Licht der individuellen Lichtquellen in die Segmente der Lichtverteilung umzuformen, können Primäroptiken zum Einsatz kommen, welche mit jeweils den Lichtquellen zugeordneten Lichtaufnahmeabschnitten das Licht der Lichtquellen aufnehmen und einem ggf. gemeinsamen Lichtabgabeabschnitt zuführen. Solche Ausgestaltungen sind beispielsweise als Matrixfernlicht bekannt. Um ein bestimmtes Segment der abgegebenen Lichtverteilung auszublenden, beispielsweise weil ein Verkehrsteilnehmer im Sichtfeld mit einer Kamera erkannt wurde, kann eine bestimmte Lichtquelle deaktiviert werden. Solche Beleuchtungseinrichtungen sind beispielsweise in der DE 10 2011 077 636 A1 oder der DE 10 2008 036 193 A1 beschrieben.

Bei den genannten Beleuchtungseinrichtungen sind die mehreren Lichtquellen z.B. matrixartig oder streifenartig nebeneinander auf einer Platine angeordnet. Hierbei besteht das Problem, dass sich eine ausreichende Homogenität der abgegebenen Lichtverteilung oft nur technisch aufwändig realisieren lässt. So macht beispielsweise die Wärmeabgabe der mehreren Lichtquellen eine beabstandete Anordnung der Lichtquellen auf der Platine erforderlich. Dies kann dazu führen, dass die abgegebene Lichtverteilung Zonen geringerer Helligkeit aufweist, welche durch die Zwischenräume zwischen den Lichtquellen hervorgerufen werden. Nachteilig kann außerdem sein, das die Lage und Form der ausblendbaren Bereiche in der Lichtverteilung konstruktiv fest vorgegeben ist. Es kann nur selektiv ein bestimmtes Segment der Lichtverteilung aus- und eingeblendet werden, nicht jedoch die Größe oder Form des ausgeblendeten Segments flexibel an die Größe und/oder die Entfernung eines erkannten Verkehrsteilnehmers dem Sichtfeld angepasst werden.

Variable und flexibel anpassbare Lichtverteilungen können beispielsweise mit Laser-Zusatzlichteinrichtungen erzeugt werden, insbesondere mit sog. Laserscannern. Die Verwendung von Laser-Lichtquellen (z.B. Halbleiterlaser, Laserdioden) kann für Beleuchtungsanwendungen vorteilhafte Eigenschaften aufweisen, wie beispielsweise eine kleine lichtaussendende Fläche, hohe Strahlungsintensitäten und die Ausstrahlung von weitgehend kollimierten Lichtbündeln. Allerdings weisen Laserlichtquellen auch ein besonderes Gefährdungspotential auf, was u.a. auf die prinzipbedingte Abgabe von vergleichsweise hochintensivem, stark kollimiertem und ggf. kohärentem Licht zurückzuführen ist. Da Laserlicht ferner meist monochromatisch ist, muss das von der Laserlichtquelle abgegebene Licht in eine Lichtverteilung mit einem für die Zwecke der Kfz-Beleuchtungseinrichtung nutzbarem Spektrum umgewandelt werden.

Ein mit einem Laserscanner ausgestatteter Scheinwerfer ist beispielsweise aus der DE 10 2007 055 480 B3 bekannt. Hierbei wird ein fokussierter Laserstrahl mithilfe einer Strahllenkeinrichtung über einen Wellenlängenkonverter zur Umwandlung des Laserlichts in eine Weißlichtverteilung bewegt. Das so erzeugte Leuchtmuster wird über eine Optik auf die Fahrbahn gerichtet. Durch Bewegung des Lichtflecks des fokussierten Laserstrahls auf dem Wellenlängenkonverter und durch gleichzeitiges Modulieren der Laserleistung können beliebige Lichtverteilungen erzeugt werden.

Um mit einem derartigen Laser-Scheinwerfer ein ausgedehntes Sichtfeld ausreichend beleuchten zu können, sind mehrere und ggf. leistungsstarke Laser erforderlich. Außerdem können mehrere Strahllenkungseinrichtungen notwendig sein. Dies macht den Laser-Scheinwerfer teuer und technisch aufwändig.

Die Aufgabe der vorliegenden Erfindung besteht darin, eine flexibel anpassbare Lichtverteilung, insbesondere ein adaptives Frontlicht, bereitzustellen, welches sich mit möglichst geringer Leistungsaufnahme effizient erzeugen lässt und technisch sowie kostenmäßig aufwändige Konstruktionen möglichst vermeidet. Insbesondere soll eine großflächige Ausleuchtung mit kontrastreichen und flexibel anpassbaren Variationen der Lichtverteilung möglich sein.

Diese Aufgabe wird mit einem Verfahren gemäß dem Anspruch 1 gelöst. Das Verfahren ist insbesondere zur Erzeugung einer Frontlichtverteilung für ein beispielsweise auf einer Fahrbahn fahrendes Kraftfahrzeug (Kfz) ausgebildet. Hierzu findet eine Kfz-Beleuchtungseinrichtung (z.B. Scheinwerfer) Verwendung, welche eine Basislichteinrichtung zur Abstrahlung einer Basislichtverteilung mit fest vorgegebenen, ausblendbaren (d.h. verdunkelbaren) Zonen aufweist. Ferner umfasst die Beleuchtungseinrichtung ein Laserzusatzlicht (d.h. eine Laserzusatzlichteinrichtung) mit einer Laserlichtquelle und einer Lichtwandlungseinrichtung zur Umformung des Laserlichts in eine flexibel variierbare Zusatzlichtverteilung. Gemäß dem Verfahren wird eine Basislichtverteilung mit wenigstens einer ausgeblendeten Zone erzeugt. In die ausgeblendete Zone dringt in welche nur eine erheblich unterdrückte oder keine Intensität des Lichts der Basislichtverteilung ein. Darüber hinaus wird eine Zusatzlichtverteilung derart erzeugt, dass sie die ausgeblendete Zone zumindest teilweise überdeckt oder ausfüllt. Grundsätzlich kann die Zusatzlichtverteilung auch mit der Basislichtverteilung überlappen.

Die ausgeblendeten Zonen sind im vorliegenden Zusammenhang Raumwinkelbereiche, welche ausgehend von der Beleuchtungseinrichtung betrachtet nicht oder nur gering ausgeleuchtet sind. Auf einem entfernten, im Wesentlichen senkrecht zur Hauptabstrahlrichtung der Beleuchtungseinrichtung orientierten Testschirm betrachtet, führen solche ausgeblendeten Raumwinkelbereiche zu Zonen mit geringer Intensität, die vorliegend als ausgeblendete Zonen bezeichnet sind. Die Zonen sind ausgeblendet insofern, als sie im Vergleich zur übrigen Lichtverteilung dunkel oder zumindest erheblich abgedunkelt sind, insbesondere nur einen Bruchteil der Intensität aufweisen (z.B. weniger oder erheblich weniger als 50%).

Die Lage und Größe der ausgeblendeten Zonen sind bei der Basislichteinrichtung konstruktiv im Wesentlichen festgelegt, beispielsweise durch Anzahl, Anordnung und Ausgestaltung von individuell ansteuerbaren Lichtquellen und/oder von zugeordneten Primäroptiken eines Matrixlichts. Insofern kann zwar selektiv eine bestimmte Zone ausgeblendet werden, jedoch kann die Größe und Lage der jeweiligen Zonen nicht wesentlich beeinflusst werden.

Die ausgeblendeten Zonen der Basislichtverteilung können z.B. in solchen Bereichen gezielt gewählt werden, in welchen eine Blendung anderer Verkehrsteilnehmer möglich wäre. So kann ein adaptives Frontlicht zur Erhöhung der Verkehrssicherheit bereitgestellt werden. Grundsätzlich können sich aber auch konstruktionsbedingt ausgeblendete Zonen ergeben, die nicht gezielt zur Anpassung der Lichtverteilung erzeugt werden. Beispielsweise bei einer von mehreren Lichtquellen gespeisten Beleuchtungseinrichtung weisen die verschiedenen Lichtquellen oftmals einen baulich bedingten Abstand auf, z.B. um Abwärme abtransportieren zu können. Diese Beabstandung kann zu Bereichen mit verringerter Intensität führen.

Bei der vorliegend beschriebenen Erfindung wird das Laserzusatzlicht mit seiner flexibel veränderbaren Zusatzlichtverteilung gezielt zur Ergänzung der Basislichtverteilung eingesetzt. Hierbei muss das Laserzusatzlicht nicht den gesamten auszuleuchtenden Bereich eines Sichtfeldes überdecken, sondern nur gezielt (und ggf. teilweise) die verdunkelten Zonen der Basislichtverteilung. Hierbei kann das Laserzusatzlicht z.B. für eine Homogenisierung der Lichtverteilung eingesetzt werden und gezielt solche Bereiche der Basislichtverteilung ausleuchten, die technisch oder konstruktiv bedingt dunkel sind. Insofern kann nach einer Ausgestaltung des erfindungsgemäßen Verfahrens die Zusatzlichtverteilung die Basislichtverteilung derart ergänzen, dass zumindest bereichsweise eine gleichmäßige Ausleuchtung durch die abgegebene Lichtverteilung erzielt wird.

Denkbar ist jedoch auch, dass durch die Basislichtverteilung durch geeignete Ausblendung einer ausblendbaren Zone zunächst eine Grundanpassung der Lichtverteilung erfolgt, z.B. eine Anpassung an die jeweilige Verkehrsposition durch Ausblenden eines bestimmten Bereiches. Hier kommt die vergleichsweise robuste und kostengünstige Technologie der Basislichteinrichtung zum Einsatz. Die Feinabstimmung der Lichtverteilung kann dann mittels der Zusatzlichtverteilung erfolgen (siehe nachfolgend).

Eine besonders vorteilhafte Ausgestaltung besteht darin, dass die Zusatzlichtverteilung die ausgeblendete Zone der Basislichtverteilung bis auf ein Dunkelfeld möglichst homogen ausleuchtet. Das Dunkelfeld ist insbesondere vergleichsweise scharf begrenzt. Insbesondere ist das Dunkelfeld im Sichtfeld vollständig umschlossen, d.h. in alle Richtungen im Sichtfeld gegenüber dem ausgeleuchteten Bereich der Zusatzlichtverteilung begrenzt. Das Dunkelfeld kann z.B. im Wesentlichen rechteckig, quadratisch, kreisförmig oder streifenförmig sein. Jedoch sind auch andere Formen denkbar. Das Dunkelfeld kann z.B. im Sichtfeld um einen erkannten Verkehrsteilnehmer herum begrenzt sein, so dass eine Blendung des Verkehrsteilnehmers vermieden wird. Bei bekannten adaptiven Frontlichtern sind die ausblendbaren Zonen wie erläutert in der Regel konstruktiv vorgegeben. Die ausgeblendeten Zonen können dann nicht flexibel angepasst werden. Zur Lageveränderung des Dunkelbereiches muss beispielsweise zu einer benachbarten ausgeblendeten Zone gewechselt werden. Um mit derartigen Konstruktionen eine flexible Anpassbarkeit mit hoher räumlicher Auflösung zu erzielen, müssten eine große Zahl von ausblendbaren Zonen bereitgestellt werden, was eine hohe Anzahl von Lichtquellen und entsprechend komplexen Primäroptiken erfordert. Solche Vorrichtungen sind daher komplex und teuer. Eine Feinanpassung mittels des Laserzusatzlichts ermöglicht es, für die ausblendbaren Zonen der Basislichteinrichtung vergleichsweise große und wenige Zonen zu verwenden. Bei Bedarf kann dann das mittels des Laserzusatzlichts erzeugte Dunkelfeld angepasst und lageverändert werden.

Insbesondere ist der Kontrastübergang zwischen dem Dunkelfeld und der daran angrenzenden Zusatzlichtverteilung vergleichsweise schärfer ausgebildet (d.h. steilerer Intensitätsverlauf), als sich dies bei einem Kontrastübergang zwischen einer ausgeblendeten Zone und der angrenzenden Basislichtverteilung (bei inaktiver Zusatzlichtverteilung) realisieren ließe.

Zur weiteren Ausgestaltung ist eine Bildaufnahmeeinrichtung (z.B. Kamera) vorgesehen, welche ein Sichtfeld des Kraftfahrzeuges überwacht, in welchem sich andere Verkehrsteilnehmer befinden können. Zunächst kann dann eine der vorgegebenen ausblendbaren Zonen der Basislichteinrichtung derart ausgeblendet werden, dass der erkannte Verkehrsteilnehmer von der ausgeblendeten Zone umfasst ist.

Das Sichtfeld ist grundsätzlich ein von der Beleuchtungseinrichtung ausgehender Raumwinkelbereich. In Projektion auf einen senkrecht zur Fahrtrichtung bzw. Abstrahlrichtung aufgespannten Testschirm betrachtet, ist das Sichtfeld z.B. ein im Wesentlichen rechteckiger oder streifenförmiger Bereich. Die ausgeblendeten Zonen lassen sich dann jeweils bestimmten Bereichen des Sichtfeldes zuordnen.

Zur weiteren Ausgestaltung leuchtet die Zusatzlichtverteilung die einen erkannten Verkehrsteilnehmer umfassende ausgeblendete Zone der Basislichtverteilung dann wieder teilweise aus, wobei das genannte Dunkelfeld ausgespart wird und an die Ausdehnung des erkannten Verkehrsteilnehmers im Sichtfeld angepasst ist. Insbesondere kann die Ausdehnung des Dunkelfeldes auf die Ausdehnung des erkannten Verkehrsteilnehmers im Sichtfeld begrenzt sein. Dies ermöglicht es auch bei einer groben Rasterung der ausblendbaren Zonen der Basislichtverteilung das tatsächliche Dunkelfeld flexibel an verschiedene Verkehrsteilnehmer und/oder an verschiedene Entfernungen von Verkehrsteilnehmern anzupassen. Somit kann gleichzeitig eine möglichst vollständige Ausleuchtung des Sichtfeldes garantiert werden und dennoch eine Blendung der anderen Verkehrsteilnehmer weitgehend vermieden werden. Da nicht die gesamte Ausleuchtung des Sichtfeldes mit dem Laserzusatzlicht erzeugt wird, verbindet das erfindungsgemäße Verfahren die Vorteile des flexiblen Laserlichts mit dem technisch einfacheren und robusten Aufbau der Basislichteinrichtung.

Die ausblendbaren Zonen der Basislichtverteilung werden vorzugsweise derart erzeugt, dass sie sich in dem Sichtfeld bei bestimmungsgemäßem Betrieb der Kfz-Beleuchtungseinrichtung im Wesentlichen vertikal erstrecken. Insbesondere sind streifenartige Ausgestaltungen vorteilhaft. Mehrere ausblendbare Zonen sind dabei vorzugsweise streifenartig unmittelbar nebeneinander liegend angeordnet. So kann beispielsweise bei Erkennung eines Verkehrsteilnehmers ein vertikaler Streifen ausgeblendet werden, der den Verkehrsteilnehmer umfasst und sich ggf. zusätzlich noch oberhalb und/oder unterhalb des Verkehrsteilnehmers erstreckt. Dabei kann die ausblendete Zone auch über den Verkehrsteilnehmer hinaus lateral ausgedehnt sein. Eine ausreichende Sicht wird dadurch erzielt, dass die ausgeblendete Zone ggf. mit der Zusatzlichtverteilung derart ergänzt ausgeleuchtet wird, dass der Verkehrsteilnehmer noch ausgespart bleibt (Dunkelfeld), jedoch die Ausführung des Dunkelfeldes auf ein Minimum begrenzt ist.

Durch die flexibel mit dem Laserzusatzlicht erzeugbare Zusatzlichtverteilung kann die Ausleuchtung um die dunkle Zone herum optimal angepasst werden und dadurch Fahrkomfort und Sicherheit erhöht werden. Beispielsweise weist die Zusatzlichtverteilung (z.B. in der ausgeblendeten Zone der Basislichtverteilung) ein Dunkelfeld auf, an welches sich vertikal unten unmittelbar ein erleuchtetes Vorfeldausleuchtsegment der Zusatzlichtverteilung anschließt. Das Vorfeldausleuchtsegment der Zusatzlichtverteilung wird durch das Laserzusatzlicht erzeugt und dient dazu, das Fahrzeugvorfeld unterhalb des Dunkelfeldes auszuleuchten.

Denkbar ist außerdem, dass die Zusatzlichtverteilung links und rechts neben dem Dunkelfeld sich streifenartig erstreckende ausgeleuchtete Reichweitensegmente aufweist. Die Reichweitensegmente werden ebenfalls von dem Laserzusatzlicht erzeugt und dienen der Ausleuchtung eines Fernbereichs im Sichtfeld. Die Reichweitesegmente können vollständig in der ausgeblendeten Zone der Basislichtverteilung liegen, oder auch mit den angrenzenden hellen Bereichen der Basislichtverteilung überlappen.

Zur weiteren Ausgestaltung kann die Zusatzlichtverteilung sich seitlich an das Dunkelfeld und ggf. an die genannten Reichweitensegmente anschließende Seitensegmente aufweisen. Die von dem Laserzusatzlicht erzeugten Seitensegmente können beispielsweise von dem Dunkelfeld nach lateral außen dreiecksförmig auslaufen. Die Seitensegmente sind vorzugsweise im vertikal unten liegenden Bereich des Dunkelfeldes angeordnet. Dies verbessert die Ausleuchtung der Seitenbereiche, vorzugsweise unterhalb einer Hell-Dunkel-Grenze der abgegebenen Lichtverteilung.

Die Basislichtverteilung und die Zusatzlichtverteilung sind vorzugsweise dazu ausgebildet, eine Fernlichtverteilung für das Kraftfahrzeug zu bilden, da hierbei Maßnahmen zur Vermeidung einer Blendung von anderen Verkehrsteilnehmern besonders wichtig sind. Die Beleuchtungseinrichtung kann insofern noch weitere Einrichtungen aufweisen, welche beispielsweise eine abgeblendete Lichtverteilung mit einer zumindest abschnittsweise horizontal verlaufenden Hell-Dunkel-Grenze ausstrahlen (die selbstverständlich nur bei deaktivierter Fernlichtverteilung beobachtbar ist). Die Basislichtverteilung kann sich dann zumindest teilweise oberhalb der Hell-Dunkel-Grenze der abgeblendeten Lichtverteilung erstrecken und die ausblendbaren Zonen liegen dann ebenfalls zumindest teilweise oberhalb der Hell-Dunkel-Grenze der abgeblendeten Lichtverteilung.

Grundsätzlich kann es aber auch vorteilhaft sein, wenn die Basislichtverteilung und/oder die Zusatzlichtverteilung auch zur abgeblendeten Lichtverteilung beitragen oder diese bereitstellen. Dann kann auch in der abgeblendeten Lichtverteilung unterhalb der Hell-Dunkel-Grenze eine wie beschrieben flexibel anpassbare ausgeblendete Zone bereitgestellt werden. Dadurch können beispielsweise für erkannte Verkehrsteilnehmer Blendungen durch Lichtreflexionen auf beispielsweise nassen Fahrbahnoberflächen vermieden werden.

Handelt es sich bei der Basislichtverteilung um ein Fernlicht mit ausblendbaren Fernlichtsegmenten, so kann die lasergespeiste Zusatzlichtverteilung z.B. dazu ausgebildet sein, eine anderweitig vorhandene Abblendlicht-Basislichtverteilung nahe der Hell-Dunkel-Grenze zu verstärken oder zu ergänzen. Dadurch kann die Fahrbahn besser ausgeleuchtet werden. In diesem Fall kann die unterstützende Zusatzlichtverteilung eine sich horizontal erstreckende, insbesondere entlang der Hell-Dunkel-Grenze erstreckende, Formgebung aufweisen (z.B. länglich). Dadurch kann gezielt die Reichweite bestimmter Bereiche der Lichtverteilung oberhalb oder unterhalb einer Hell-Dunkel-Grenze erhöht werden (z.B. Fernlichtmaximum oder Abblendlicht-Reichweitenbereich).

Die Basislichtverteilung wird vorzugsweise mit einer Basislichteinrichtung erzeugt, welche eine Mehrzahl von individuell ansteuerbaren, aktivierbaren und deaktivierbaren Lichtquellen aufweist. Vorzugsweise kommen hier Leuchtdioden (LEDs) zum Einsatz. Jeder Lichtquelle ist eine ausblendbare Zone zugeordnet, d.h. das Licht der jeweiligen Lichtquelle fällt in diese zugeordnete Zone. Zur Erzeugung einer ausgeblendeten Zone wird eine ausgewählte Lichtquelle oder mehrere ausgewählte Lichtquellen deaktiviert. Um die Zuordnung der jeweiligen Lichtquelle zu den ausblendbaren Zonen auszugestalten, kann den Lichtquellen eine Primäroptik zugeordnet sein. Die Primäroptik kann beispielsweise eine Mehrzahl von Lichtleitelementen aufweisen, welche jeweils den Lichtquellen zugeordnet sind und welche ggf. in einen gemeinsamen Lichtaustrittsabschnitt einmünden. Die Lichtleitelemente können matrixartig neben- und/oder übereinander angeordnet sein. Insofern kann die Vorrichtung in der Art eines Matrixlichtes ausgestaltet sein.

Das Laserzusatzlicht kann dann z.B. zur homogenen Ergänzung des Matrix-Basislichtes dienen. Insbesondere kann eine verstärkte Ausleuchtung möglichst nahe an oder um einen erkannten Verkehrsteilnehmer erfolgen.

Das Laserzusatzlicht macht sich die eingangs beschriebenen Vorteile von Laserlichtquellen zunutze. Dabei sind grundsätzlich verschiedene Möglichkeiten denkbar, wie aus dem Laserlicht der Laserlichtquellen mit den charakteristischen Eigenschaften (monochromatische Lichtverteilung, stark kollimiert, kohärent) eine Lichtverteilung erzeugt wird, die für die Zwecke der Kfz-Beleuchtungseinrichtungen nutzbar ist.

In dieser Hinsicht ist es bekannt, monochromatisches Licht mittels Wellenlängenkonvertern in polychromatisches oder weißes Licht umzuwandeln. Ein Wellenlängenkonverter gibt aufgrund einer Bestrahlung mit beispielsweise im Wesentlichen monochromatischem Laserlicht eine Lichtverteilung mit den gewünschten spektralen Eigenschaften ab. Die Wellenlängenkonverter können beispielsweise als Lumineszenzkonverter ausgebildet sein und einen Lumineszenzfarbstoff aufweisen, welcher das auf den Lumineszenzkonverter eingestrahlte Licht durch Fotolumineszenz, Fluoreszenz oder Phosphoreszenz umwandelt. Dabei gibt der Konverter Licht mit einer von dem eingestrahlten Laserlicht abweichenden Wellenlänge ab, welche sich mit dem Laserlicht mischt, oder aber der Wellenlängenkonverter wirkt selbst als Mischlichtquelle für Licht mit den gewünschten spektralen Eigenschaften.

Nach einer bevorzugten Ausgestaltung erfolgt insofern die Erzeugung der Zusatzlichtverteilung mittels der Laserlichtquelle und der Lichtwandlungseinrichtung dadurch, dass ein Wellenlängenkonverter zur Umwandlung von Laserlicht sowie eine Strahllenkungsvorrichtung zum positionsgenauen Scannen eines Laserstrahls über eine Oberfläche des Wellenlängenkonverters vorgesehen ist. Die Strahllenkungsvorrichtung kann beispielsweise bewegbare Spiegel aufweisen, mit welchen der Laserstrahl positionsgenau über den Wellenlängenkonverter gescannt, d.h. positionsgenau gelenkt oder gerastert werden kann. Durch das Scannen des Laserstrahls über den Wellenlängenkonverter kann ein Leuchtmuster (d.h. eine durch Konversion erzeugte Zusatzlichtverteilung) erzeugt werden, welches mittels einer Sekundäroptik (z.B. Projektionslinse) in die Zusatzlichtverteilung umgeformt wird.

Das positionsgenaue Scannen des Laserstrahls (oder eines Fokuspunktes des Laserstrahls) über eine zur Lichtumwandlung und Lichtabgabe ausgebildete aktive Oberfläche des Wellenlängenkonverters ermöglicht die Erzeugung veränderbarer Leuchtmuster. Hierzu kann eine entsprechende Steuereinrichtung zum Ansteuern der Strahllenkungsvorrichtung und/oder der Laserlichtquelle vorgesehen sein.

Denkbar sind jedoch auch Ausgestaltungen des Laserzusatzlichtes, welche mehrere verschiedene Laserlichtquellen umfassen, z.B. je einen Laser zum Erzeugen von rotem, grünem oder blauem Licht. Die Strahlen der verschiedenen Laser werden zur Erzeugung von nutzbarem weißem Licht kollinear überlagert (sog. RGB-Laserlichtquelle). Hiermit können die gewünschten Lichtverteilungen unter Umständen direkt erzeugt und über eine geeignete Lichtwandlungseinrichtung (z.B. Projektionslinse) in die Zusatzlichtverteilung umgeformt werden. Denkbar ist auch, dass bei den Lichtquellen ein Wellenlängenkonverter in die jeweilige Lichtquelle selbst integriert ist, so dass die Lichtquelle selbst nutzbares Licht aussendet. Die verwendeten Laser sind vorzugsweise als Halbleiterlaser, Halbleiterlaserdioden oder Ähnliches ausgebildet.

Die eingangs gestellte Aufgabe wird auch durch eine Kfz-Beleuchtungseinrichtung (z.B. Scheinwerfer) gelöst, welche zur Erzeugung einer Frontlichtverteilung nach dem beschriebenen Verfahren ausgebildet ist. Insbesondere umfasst die Beleuchtungseinrichtung eine Basislichteinrichtung zur Abstrahlung einer Basislichtverteilung mit fest vorgegebenen ausblendbaren Zonen sowie ein Laserzusatzlicht (d.h. eine Laserzusatzlichteinrichtung). Das Laserzusatzlicht umfasst wenigstens eine Laserlichtquelle und eine Lichtwandlungseinrichtung zur Umformung des Laserlichts in eine flexibel veränderbare Zusatzlichtverteilung.

Die Beleuchtungseinrichtung kann außerdem eine Steuereinrichtung zur Ansteuerung der Basislichteinrichtung und/oder des Laserzusatzlichtes zur Durchführung des beschriebenen Verfahrens aufweisen. Die verschiedenen lichterzeugenden Einheiten der Beleuchtungseinrichtung, insbesondere die Basislichteinrichtung und das Laserzusatzlicht, können als modulare Einheiten (Basislichtmodul, Laserzusatzlichtmodul) ausgestaltet sein. Diese Module können in einem gemeinsamen Gehäuse der Beleuchtungseinrichtung angeordnet sein, wobei das Gehäuse einen Lichtaustrittsabschnitt aufweisen kann, welcher beispielsweise durch eine Sichtscheibe abgedeckt ist.

Die Erfindung wird im Folgenden anhand der Figuren näher erläutert.

Es zeigen:
- Figur 1: skizzierte Darstellung einer Basislichteinrichtung für eine Kfz-Beleuchtungseinrichtung zur Durchführung des erfindungsgemäßen Verfahrens;
- Figur 2: skizzierte Darstellung einer beispielhaften Basislichtverteilung;
- Figur 3: skizzierte Darstellung eines Laserzusatzlichtes einer Kfz-Beleuchtungseinrichtung für ein erfindungsgemäßes Verfahren;
- Fig. 4a bis 4c: skizzierte Darstellungen zur Erzeugung einer Frontlichtverteilung;
- Fig. 5a und 5b: skizzierte Darstellungen zur Erläuterung einer weiteren Ausgestaltung einer Frontlichtverteilung; und
- Figur 6: skizzierte Darstellung des Beleuchtungsbildes einer beispielhaften Zusatzlichtverteilung.

In den Figuren sowie in der nachfolgenden Beschreibung sind für identische oder einander entsprechende Merkmale jeweils dieselben Bezugszeichen verwendet.

Die Erfindung wird beispielhaft anhand der Erzeugung eines adaptiven Fernlichtes erläutert, welches eine Frontlichtverteilung für ein Kfz bildet oder zu dieser beiträgt. Die möglichen Einsatzgebiete sind aber nicht hierauf eingeschränkt.

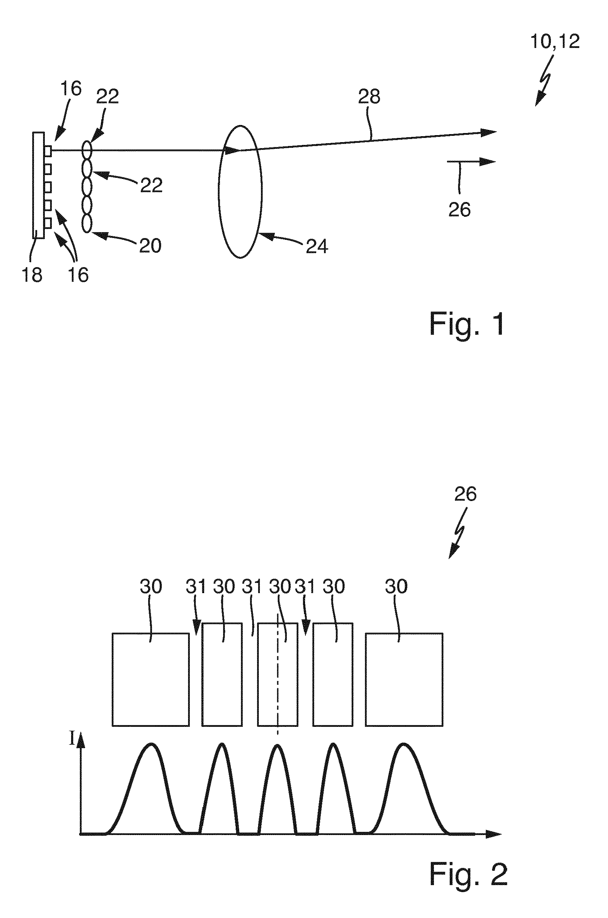

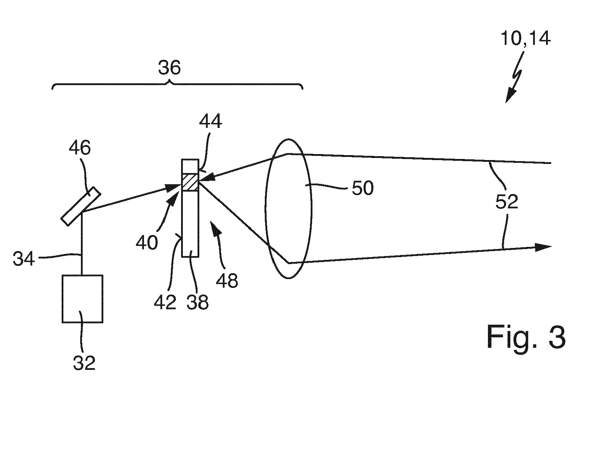

Zur Erzeugung der Frontlichtverteilung dient eine Kfz-Beleuchtungseinrichtung 10, welche eine in Figur 1 skizziert dargestellte Basislichteinrichtung 12 und eine in Figur 3 skizziert dargestellte Laserzusatzlichteinrichtung (Laserzusatzlicht 14) umfasst.

Die Basislichteinrichtung 12 ist z.B. als Matrixlicht ausgestaltet und umfasst eine Mehrzahl von Lichtquellen (insbesondere LEDs) 16, welche matrixartig nebeneinander auf einer Trägerplatine 18 angeordnet sind. Die Lichtquellen 16 sind vorzugsweise individuell aktivierbar und deaktivierbar. Den Lichtquellen 16 ist eine Primäroptik 20 zugeordnet, welche vorzugsweise eine der Anzahl der Lichtquellen 16 entsprechende Zahl von Primäroptikelementen (z.B. Lichtleitelementen 22) umfasst. Das von den Lichtquellen 16 abgegebene und ggf. mit den Lichtleitelementen 22 umgeformte Licht wird vorzugsweise über eine Sekundäroptik 24 in eine Basislichtverteilung 26 umgeformt. Die Sekundäroptik ist z.B. als Projektionslinse 24 ausgebildet. In der Basislichtverteilung 26 können einzelne Lichtbündel 28 dadurch ausgeblendet werden, dass beispielsweise eine Lichtquelle 16 selektiv deaktiviert wird.

Die Figur 2 zeigt skizziert die erzeugte Basislichtverteilung 26, wie sie beispielsweise auf einem in Abstrahlrichtung beabstandeten und sich senkrecht zur Abstrahlrichtung erstreckenden Testschirm beobachtbar ist. Die Basislichtverteilung 26 weist mehrere ausblendbare Zonen 30 auf, welche den von den einzelnen Lichtquellen 16 gespeisten Lichtbündeln 28 zugeordnet sind. Durch Aktivieren und Deaktivieren der jeweiligen Lichtquelle 16 kann somit eine ausblendbare Zone 30 gezielt ausgeblendet werden. Im dargestellten Beispiel weist die Basislichtverteilung 26 außerdem noch ausgeblendete Zonen 31 mit verringerter Intensität auf, welche konstruktiv bedingt sind und beispielsweise auf die Beabstandung der Lichtquellen 16 auf der Trägerplatine 18 zurückzuführen sind. Zur Veranschaulichung der Lichtverteilung 26 ist in Figur 2 schematisch noch ein Intensitätsverlauf (I) entlang der horizontalen Richtung dargestellt.

Das in der Figur 3 dargestellte Laserzusatzlicht 14 ist als Laserscanner ausgestaltet. Das Laserzusatzlicht 14 umfasst eine Laserlichtquelle 32, welche einen Laserstrahl 34 abgibt. Der Laserstrahl 34 ist beispielsweise stark kollimiert und kann prinzipbedingt monochromatisch sein. Es ist daher erforderlich, den Laserstrahl 34 vor Abgabe in die Frontlichtverteilung in ein nutzbares Licht umzuwandeln und aus dem umgewandelten Licht eine geeignete Lichtverteilung zu formen. Hierzu weist das Laserzusatzlicht 14 eine Lichtwandlungseinrichtung 36 auf. Die Lichtwandlungseinrichtung 36 umfasst zum einen Wellenlängenkonverter 38. Der Wellenlängenkonverter 38 ist dazu ausgebildet, bei Anregung durch Laserlicht z.B. in einem Aufstrahlpunkt 40 Licht mit einer für die Zwecke der Beleuchtungseinrichtung geeigneten Charakteristik abzugeben. Im dargestellten Beispiel ist der Wellenlängenkonverter 38 plattenartig ausgebildet und weist eine Lichteinstrahlfläche 42 und eine aktive Lichtabgabefläche 44 auf. Die Lichtwandlungseinrichtung 36 umfasst ferner eine Strahllenkungsvorrichtung 46, welche im dargestellten Beispiel als präzise bewegbarer Spiegel ausgestaltet ist. Mittels der Strahllenkungsvorrichtung 46 kann der Laserstrahl 34 ortsaufgelöst über die Lichteinstrahlfläche 42 des Wellenlängenkonverters 38 gescannt werden. Dadurch verlagert sich der Aufstrahlpunkt 40 auf der Oberfläche des Wellenlängenkonverters 38. Auf der Lichtabgabefläche 44 des Wellenlängenkonverters 38 kann daher eine verlagerbare Punktlichtquelle erzeugt werden. Durch Scannen des Laserstrahls 34 mittels der Strahllenkungsvorrichtung 46 kann so auf dem Wellenlängenkonverter 38 ein Leuchtmuster 48 erzeugt werden. Das Leuchtmuster 48 kann dann durch eine geeignete Sekundäroptik 50 der Lichtwandlungseinrichtung 36 in eine Zusatzlichtverteilung 52 projiziert werden. Durch Scannen des Laserstrahls 34 kann daher eine Zusatzlichtverteilung 52 mit flexible variierbarer Form und Intensitätsgebung erzeugt werden.

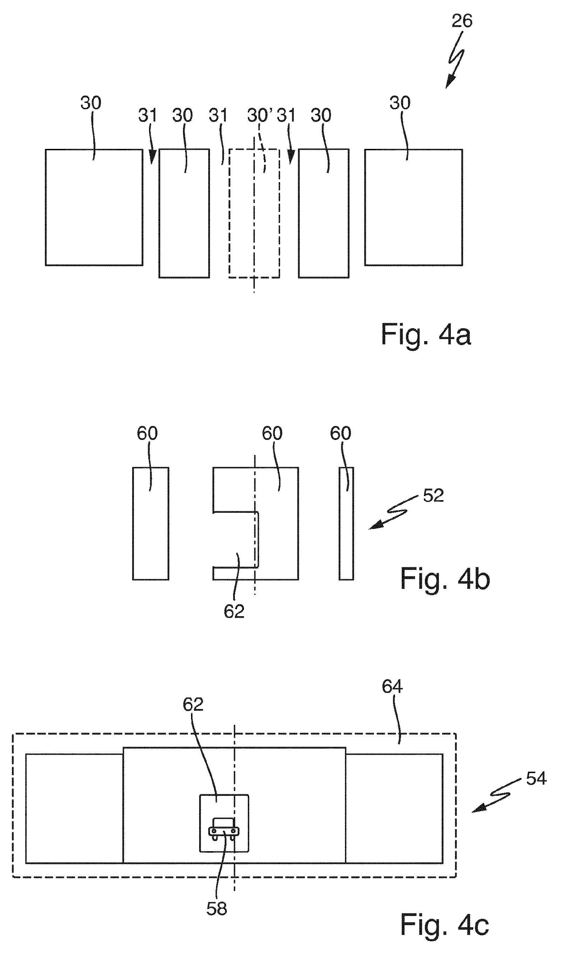

Anhand der Figur 4 wird beispielhaft die Kombination der Basislichtverteilung 26 und der Zusatzlichtverteilung 52 zu einer Frontlichtverteilung 54 erläutert. Die Lichtverteilungen sind wiederum skizziert dargestellt durch ein Ausleuchtbild, wie es auf einem in Abstrahlrichtung beabstandeten und senkrecht zur Abstrahlrichtung orientierten Testschirm beobachtbar ist.

Im dargestellten Beispiel soll eine Frontlichtverteilung 54 erzeugt werden, welche das vom Fahrer des Fahrzeugs beobachtbare Sichtfeld möglichst gleichmäßig ausleuchtet und dabei zuverlässig eine Blendung von weiteren im Sichtfeld vorhandenen Verkehrsteilnehmern 58 vermeidet.

Wie in Figur 4a angedeutet, wird z.B. eine Basislichtverteilung 26 erzeugt, bei welcher (verglichen mit der Darstellung in Figur 2) eine der ausblendbaren Zonen 30 verdunkelt ist und eine selektiv ausgeblendete Zone 30' bildet. Die ausgeblendete Zone 30' ist insofern selektiv ausgeblendet, als sie aktiv durch Deaktivierung einer der Lichtquellen 16 erzeugt wird. Wie erläutert, kann die Basislichtverteilung 26 auch konstruktiv bedingte ausgeblendete Zonen 31 aufweisen, die nicht aktiv erzeugt werden.

Zur Ergänzung der Basislichtverteilung 16 wird die in Figur 4b skizzierte Zusatzlichtverteilung 52 mit dem Laserzusatzlicht 14 erzeugt. Die Zusatzlichtverteilung weist helle Bereiche 60 auf, die sich beispielsweise durch Projektion des auf dem Wellenlängenkonverter 38 erzeugten Leuchtmusters 48 ergeben. Die Form der hellen Bereiche 60 kann daher präzise angepasst werden. Im dargestellten Beispiel sind zum einen lateral außen liegende helle Bereiche 60 vorgesehen, welche die konstruktiv bedingten ausgeblendeten Zonen 31 der Basislichtverteilung 26 ausleuchten. Zusätzlich wird ein zentraler heller Bereich 60 erzeugt, welcher den Bereich der gezielt ausgeblendeten Zone 30' bis auf ein scharf begrenztes Dunkelfeld 62 überdeckt und ausleuchtet.

Insgesamt ergibt sich die in Figur 4c dargestellte Frontlichtverteilung 54, bei welcher der blendungsgefährdete Bereich um einen Verkehrsteilnehmer 58 durch das Dunkelfeld 62 ausgespart ist, und ansonsten eine möglichst gleichmäßige Ausleuchtung des Sichtfeldes 64 erzielt wird.

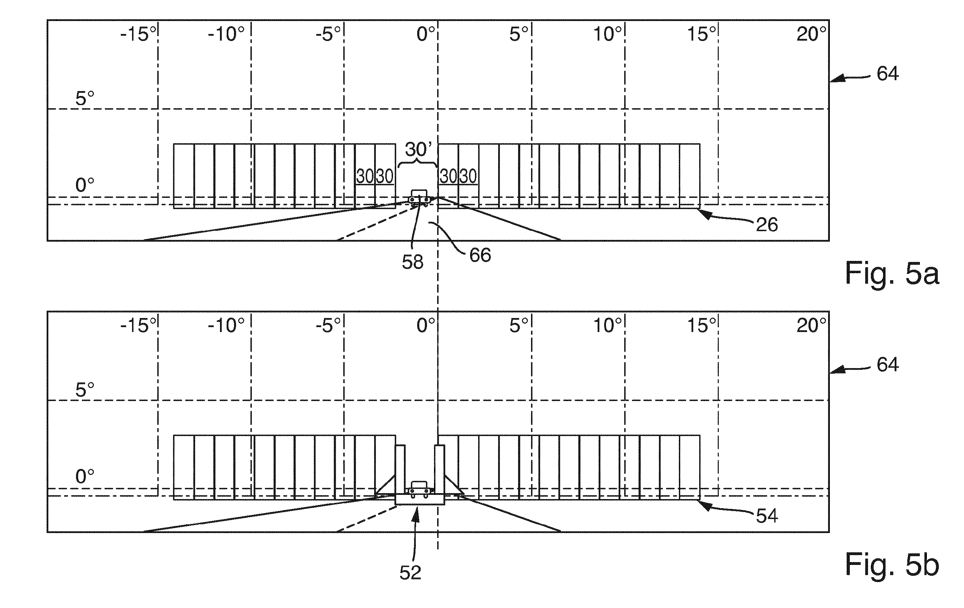

Mit dem erfindungsgemäßen Verfahren lassen sich auch komplexere Frontlichtverteilungen 54 darstellen. So zeigt beispielsweise die Figur 5a die Ansicht eines Sichtfeldes 64 aus Sicht des Fahrers eines Fahrzeuges (Kfz). Auf einer Fahrbahn 66 im Vorfeld des eigenen Kraftfahrzeuges ist ein Verkehrsteilnehmer 58 erkennbar. Wie in Figur 5a erkennbar, wird eine Basislichtverteilung 26 erzeugt, in welcher ausblendbare Zonen 30 derart als ausgeblendete Zonen 30' verdunkelt sind, dass der Verkehrsteilnehmer 58 nicht von der Basislichtverteilung 26 erfasst und geblendet wird.

Zur Ergänzung wird, wie in Figur 5b skizziert, eine komplex ausgestaltete Zusatzlichtverteilung 52 erzeugt. Die Zusatzlichtverteilung 52 dient dazu, den ausgeblendeten Bereich 30' möglichst so um den Verkehrsteilnehmer 58 herum einzuschränken, dass dieser nicht geblendet wird, jedoch gleichzeitig eine möglichst vollständige Ausleuchtung des Fahrzeugvorfeldes und der Seitenbereiche erzielt wird. Dadurch werden die Fahrsicherheit und der Fahrkomfort erhöht.

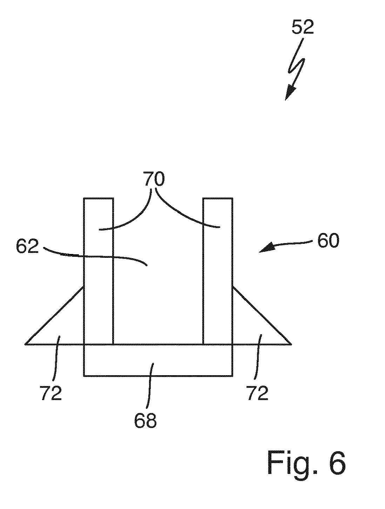

Die Figur 6 zeigt beispielhaft die einzelnen Beiträge zu der in Figur 5b skizzierten Zusatzlichtverteilung 52. Diese weist zunächst ein von umgebenden hellen Bereichen 60 eingegrenztes Dunkelfeld 62 auf. Die Abmessungen und exakten Positionen des Dunkelfeldes 62 können mittels des Laserzusatzlichts 14 flexibel angepasst werden. In vertikal unten liegender Richtung, d.h. insbesondere im Bereich des Fahrzeugvorfeldes (Vorfeldes des mit der Beleuchtungseinrichtung 10 versehenen Fahrzeuges), schließt sich an das Dunkelfeld 62 ein Vorfeldausleuchtsegment 68 der Zusatzlichtverteilung 52 an. Das Vorfeldausleuchtsegment 68 beleuchtet im Sichtfeld 54 den Bereich unterhalb des Dunkelfelds 62 und insbesondere den Bereich der Fahrbahn 66 im Fahrzeugvorfeld und unter dem erkannten Verkehrsteilnehmer 58.

Die Zusatzlichtverteilung 52 umfasst außerdem streifenartige Reichweitesegmente 70, welche sich vertikal länglich erstrecken und sich in lateraler Richtung unmittelbar an das Dunkelfeld 62 anschließen. Die Reichweitesegmente 70 erstrecken sich in vertikaler Richtung derart nach oben, dass eine Fernfeldausleuchtung des Sichtfeldes 54 erzielt werden kann (vgl. Figur 5b).

Um auch Seitenbereiche der Fahrbahn 66 zuverlässig auszuleuchten, kann die Zusatzlichtverteilung 52 außerdem Seitensegmente 72 aufweisen. Diese schließen sich vorzugsweise an das Dunkelfeld 72 oder insbesondere an die seitlichen Reichweitensegmente 70 an und laufen in lateraler Richtung beispielsweise dreiecksförmig aus.

## Patentansprüche

1. Verfahren zur Erzeugung einer Frontlichtverteilung (54) für ein Kraftfahrzeug (Kfz) mittels einer Kfz-Beleuchtungseinrichtung (10), welche eine Basislichteinrichtung (12) zur Abstrahlung einer Basislichtverteilung (26) mit vorgegebenen ausblendbaren Zonen (30) sowie ein Laserzusatzlicht (14) mit einer Laserlichtquelle (32) und einer Lichtwandlungseinrichtung (36) zur Umformung des Laserlichts (34) in eine veränderbare Zusatzlichtverteilung (52) aufweist, wobei gemäß dem Verfahren eine Basislichtverteilung (26) mit wenigstens einer ausgeblendeten Zone (30') erzeugt wird, und wobei eine Zusatzlichtverteilung (52) derart erzeugt wird, dass sie die ausgeblendete Zone (30') zumindest teilweise überdeckt.

2. Verfahren nach Anspruch 1, **dadurch gekennzeichnet, dass** die Zusatzlichtverteilung (52) derart geformt ist, dass die Zusatzlichtverteilung (52) die ausgeblendete Zone (30') der Basislichtverteilung (26) bis auf ein begrenztes Dunkelfeld (62) ausleuchtet.

3. Verfahren nach einem der vorherigen Ansprüche, **dadurch gekennzeichnet, dass** mittels einer Bildaufnahmeeinrichtung ein Sichtfeld (64) überwacht wird und Vorhandensein und Lage von Verkehrsteilnehmern (58) in dem Sichtfeld (64) erkannt wird, und dass dann, wenn ein Verkehrsteilnehmer (58) in dem Sichtfeld (64) erkannt wird, die ausgeblendete Zone (30') der Basislichtverteilung (26) derart gewählt wird, dass sie den Verkehrsteilnehmer (58) umfasst.

4. Verfahren nach Anspruch 3 und 2, **dadurch gekennzeichnet, dass** die Zusatzlichtverteilung (52) die ausgeblendeten Zone (30') teilweise ausleuchtet und das Dunkelfeld (62) an die Ausdehnung des erkannten Verkehrsteilnehmers (58) angepasst ist, insbesondere auf die Ausdehnung des erkannten Verkehrsteilnehmers (58) begrenzt ist.

5. Verfahren nach einen der vorherigen Ansprüche, **dadurch gekennzeichnet, dass** die ausgeblendete Zone (30') der Basislichtverteilung (26) sich vertikal erstreckend, insbesondere streifenartig, ausgebildet ist.

6. Verfahren nach dem vorherigen Ansprüche, **dadurch gekennzeichnet, dass** die Zusatzlichtverteilung (52) ein Dunkelfeld (62) und ein sich an dieses vertikal unten unmittelbar anschließendes, erleuchtetes Vorfeldausleuchtsegment (68) aufweist, welches zur Ausleuchtung des Fahrzeugvorfeldes unterhalb des Dunkelfeldes (62) dient.

7. Verfahren nach dem vorherigen Anspruch, **dadurch gekennzeichnet, dass** die Zusatzlichtverteilung (52) links und rechts neben dem Dunkelfeld (62) sich streifenartig erstreckende, ausgeleuchtete Reichweitensegmente (70) zur Ausleuchtung eines Fernbereichs im Sichtfeld (64) aufweist.

8. Verfahren nach Anspruch 6 oder 7, **dadurch gekennzeichnet, dass** die Zusatzlichtverteilung (52) sich seitlich an das Dunkelfeld (62) anschließende Seitensegmente (72) aufweist, die ausgehend von dem Dunkelfeld (62) nach lateral außen insbesondere dreiecksförmig auslaufen.

9. Verfahren nach einem der vorhergehenden Ansprüche, **dadurch gekennzeichnet, dass** die Basislichtverteilung (26) mit einer Basislichteinrichtung (12) erzeugt wird, welche eine Mehrzahl von individuell aktivierbaren und deaktivierbaren Lichtquellen (16) aufweist, wobei zur Erzeugung einer ausgeblendeten Zone (30') wenigstens eine ausgewählte Lichtquelle (16) deaktiviert wird.

10. Verfahren nach einem der vorherigen Ansprüche, **dadurch gekennzeichnet, dass** zur Erzeugung der Zusatzlichtverteilung (52) die Lichtwandlungseinrichtung (36) einen Wellenlängenkonverter (38) zur Umwandlung von Laserlicht (34) in für KFZ-Beleuchtung nutzbares Licht sowie eine Strahllenkungsvorrichtung (46) zum positionsgenauen Scannen eines Laserstrahls der Laserlichtquelle (32) aufweist, wobei durch Scannen des Laserstrahls auf dem Wellenlängenkonverter (38) ein Leuchtmuster (48) erzeugt wird, welches mittels einer Sekundäroptik (50) in die Zusatzlichtverteilung (52) umgeformt wird.

11. Kfz-Beleuchtungseinrichtung (10), die zur Erzeugung einer Frontlichtverteilung (54) nach einem Verfahren gemäß der vorstehenden Ansprüche ausgebildet ist, mit einer Basislichteinrichtung (12) zur Abstrahlung einer Basislichtverteilung (26) mit vorgegebenen ausblendbaren Zonen (30), und mit einem Laserzusatzlicht (14) aufweisend wenigstens eine Laserlichtquelle (16) und eine Lichtwandlungseinrichtung (36) zur Umformung des Laserlichts ein eine veränderbare Zusatzlichtverteilung (52).
